# FASCICULE DE BREVET EUROPEEN

(11) **EP 1 029 435 B1**
(45) Date de publication et mention de la délivrance du brevet: **07.01.2004**
(21) Numéro de dépôt: 00440036.2
(22) Date de dépôt: 08.02.2000
(51) Int. Cl.: A01D 34/73

(54) **Organe de coupe pour une machine de coupe**
Schneidewerkzeug einer Schneidemaschine
Cutting member of a cutting machine

(30) Priorité: 15.02.1999 FR 9901899
(43) Date de publication de la demande: 23.08.2000
(73) Titulaire: KUHN S.A., 67706 Saverne Cedex (FR)
(72) Inventeur: Neuerburg, Horst, 67700 Saverne (FR)

(56) Documents cités:
- FR-A- 2 072 365
- FR-A- 2 517 927
- FR-A- 2 561 488
- GB-A- 2 319 454
- US-A- 5 715 663
- US-A- 5 845 468

## Description

La présente invention concerne un organe de coupe d'une machine de coupe destiné à être entraîné en rotation autour d'un axe de révolution dirigé vers le haut et comportant :
- une structure principale,
- au moins deux supports rapportés à la structure principale, chaque support étant destiné à porter un élément de coupe, et
- au moins deux zones actives situées chacune aux alentours d'un élément de coupe correspondant et exposées chacune durant le travail au produit préalablement coupé par lesdits éléments de coupe, chaque zone active contribuant au transport dudit produit coupé.

Il est connu dans l'état de la technique un tel organe de coupe équipant une machine de coupe (faucheuses-conditionneuses KUHN FC 250 - FC 300).

Cette machine connue comporte un mécanisme de coupe muni d'une pluralité d'organes de coupe. Ledit mécanisme de coupe est déplacé lors du travail suivant une direction d'avance, et il est destiné à couper un produit sur pied. Pour ce faire, lesdits organes de coupe, agencés l'un à côté de l'autre suivant une ligne transversale à ladite direction d'avance, sont animés en rotation lors du travail autour d'un axe de révolution respectif dirigé vers le haut. Chaque organe de coupe est formé d'une tôle emboutie et comporte deux supports permettant chacun de porter un élément de coupe.

Chaque organe de coupe comporte en sus deux zones actives situées chacune aux alentours d'un élément de coupe correspondant et exposées chacune durant le travail au produit préalablement coupé par lesdits éléments de coupe. Chaque zone active s'étend sur une partie de la tôle pliée et du support correspondant et contribue au transport du produit coupé vers l'arrière du mécanisme de coupe. Lors du travail, un contact répété avec le produit coupé entraîne une certaine usure des organes de coupe, notamment au niveau des zones actives. Lorsque les organes de coupe ont atteint un certain degré d'usure, ils doivent être remplacés par des organes de coupe neufs.

Un organe de coupe selon le préambule de la revendication 1 est également connu par **FR-A-2 072 365** et **FR-A-2 517 927**. Dans ces deux documents, les zones actives sont réalisées au moyen de pièces formant bouclier. Ces pièces sont parfaitement dissociées des pièces formant les supports.

Le but de la présente invention est d'améliorer ces organes de coupe connus en augmentant leur durée de vie tout en cherchant à obtenir une solution simple et peu onéreuse.

Pour ce faire, l'organe de coupe est caractérisé en ce que chaque support comporte une partie supérieure formant au moins la zone active correspondante. Une telle conception permet d'augmenter la durée de vie de l'organe de coupe. En effet la zone active est maintenant formée exclusivement par le support correspondant lequel comporte des caractéristiques différentes de celles du reste dudit organe de coupe.

L'invention concerne également les caractéristiques suivantes considérées isolément ou dans toutes leurs combinaisons techniquement possibles :
- chaque partie supérieure d'un support comporte une surface supérieure convexe ;
- l'organe de coupe comporte une première partie au moyen de laquelle il est fixé à un arbre d'axe longitudinal confondu avec l'axe de révolution et une deuxième partie de forme allongée comportant d'une part une première extrémité au niveau de laquelle est situé un premier support et d'autre part une deuxième extrémité au niveau de laquelle est situé un deuxième support ;
- la deuxième partie de l'organe de coupe est de forme sensiblement ovale ou elliptique ;
- la deuxième partie de l'organe de coupe comporte d'une part une première découpe située à la première extrémité et d'autre part une deuxième découpe située à la deuxième extrémité, chaque support étant logé dans la découpe correspondante ;
- chaque support forme en grande partie l'extrémité correspondante de la deuxième partie ;
- la deuxième partie comporte à chaque extrémité une surface supérieure qui s'étend sensiblement dans le prolongement de la surface supérieure que comporte la partie supérieure du support correspondant, ce qui permet de réduire l'usure dudit support ;
- chaque support comporte une épaisseur supérieure à l'épaisseur de la deuxième partie. ce qui permet avantageusement d'augmenter la durée de vie de l'organe de coupe ;
- chaque support comporte une partie inférieure correspondante qui s'étend sous la deuxième partie de l'organe de coupe ;
- la partie inférieure de chaque support comporte une patte de renfort qui s'étend vers la première partie. ce qui permet avantageusement de rigidifier l'organe de coupe ;
- la partie inférieure de chaque support s'étend au-delà des limites de la partie supérieure dudit support ;
- la partie inférieure de chaque support suit partiellement la forme de la deuxième partie. ce qui permet également de rigidifier l'organe de coupe ;
- chaque support forme un support rapporté qui est fixé à la deuxième partie par soudure ;
- chaque support forme un support rapporté qui est fixé à la deuxième partie de manière amovible, ce qui permet avantageusement de le remplacer lorsqu'il est usé ;
- chaque support comporte un trou permettant d'y lier l'élément de coupe correspondant.

L'invention concerne également une machine de coupe destinée à être liée à un véhicule moteur et comportant un mécanisme de coupe muni d'au moins un organe de coupe entraîné en rotation autour d'un axe de révolution dirigé vers le haut, ledit (lesdits) organe(s) de coupe présentant une ou plusieurs des caractéristiques ci-dessus.

D'autres objets, caractéristiques et avantages de l'invention apparaissent dans la description suivante avec références aux dessins annexés qui représentent, à titre d'exemples non limitatifs, quelques formes de réalisation de l'organe de coupe.

Sur ces dessins :
- la **figure 1** représente une vue de dessus d'une machine de coupe sur laquelle ont été effectuées quelques coupes partielles ;
- la **figure 2** représente une vue en perspective d'un organe de coupe seul équipant la machine de coupe de la figure 1 à une autre échelle selon une première forme de réalisation ;
- la **figure 3** représente une vue de dessus d'une partie de l'organe de coupe de la figure 2 à une autre échelle ;
- la **figure 4** représente une vue de dessus d'un support seul destiné à équiper l'organe de coupe de la figure 3 ;
- la **figure 5** représente, à une autre échelle, une vue de côté de l'organe de coupe suivant la flèche V définie sur la figure 2, équipée d'un élément de coupe ;
- la **figure 6** représente une vue de côté d'un organe de coupe seul selon une deuxième forme de réalisation.

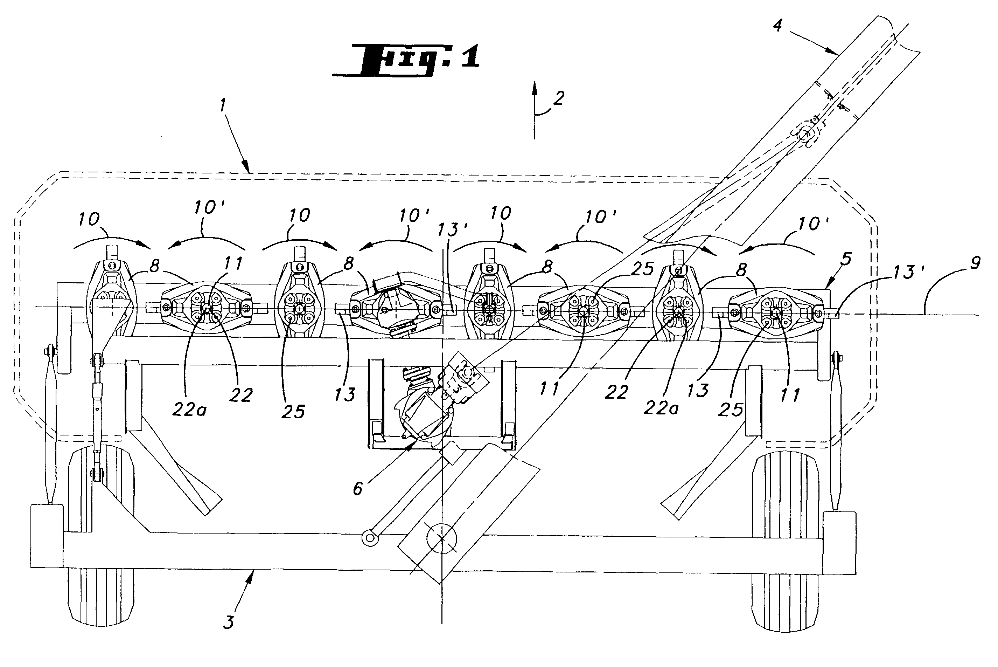

La machine de coupe (1) représentée sur la figure 1 est, selon l'exemple de réalisation représenté, une faucheuse ( 1 ) du type traînée destinée à être attelée à un véhicule moteur (non représenté) qui, durant l'utilisation, la tire dans le sens d'avance (2).

Cette faucheuse (1) comporte dans les grandes lignes un châssis mobile (3), un timon (4), un mécanisme de coupe (5) et des organes de transmission (6).

Le châssis mobile (3) est d'une part lié au mécanisme de coupe (5), et d'autre part au timon (4). Le timon (4) permet de lier la faucheuse (1) au véhicule moteur grâce à une structure d'attelage (non représentée).

Le mécanisme de coupe (5), entraîné au moyen des organes de transmission (6), comporte une pluralité d'organes de coupe (8) disposés les uns à côté des autres suivant une ligne (9) transversale au sens d'avance (2). Chaque organe de coupe (8) est entraîné en rotation dans un sens (10, 10') respectif autour d'un axe de révolution (11) sensiblement vertical.

A la lumière de la figure 1, on voit en sus que chaque organe de coupe (8) est équipé de deux éléments de coupe (13, 13') destinés à couper un produit sur pied lorsque ledit organe de coupe (8) est animé en rotation.

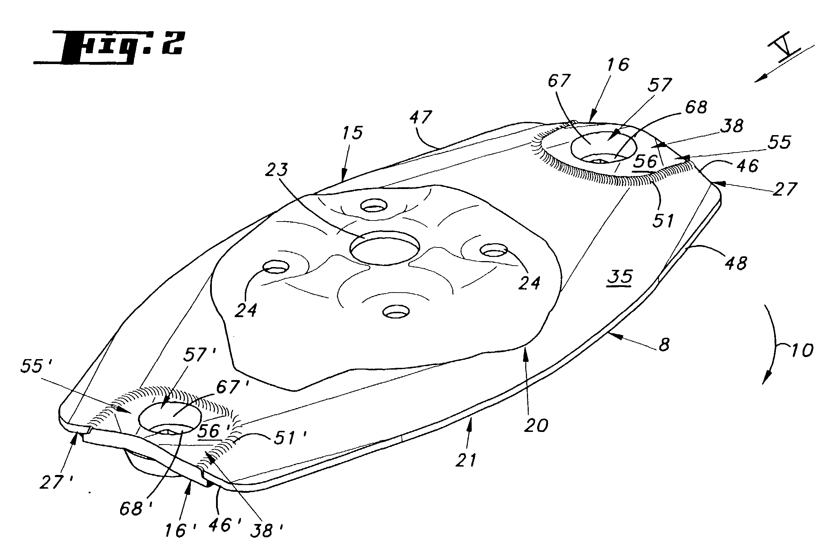

En se référant aux figures 2 à 5, chaque organe de coupe (8) est composé, selon ce premier exemple de réalisation représenté, d'une structure principale (15) et de deux supports (16, 16'). Cet organe de coupe (8) est également selon cet exemple de réalisation représenté, au moins sensiblement symétrique par rapport à un plan de symétrie longitudinal (17) et par rapport à un plan de symétrie transversal ( 18).

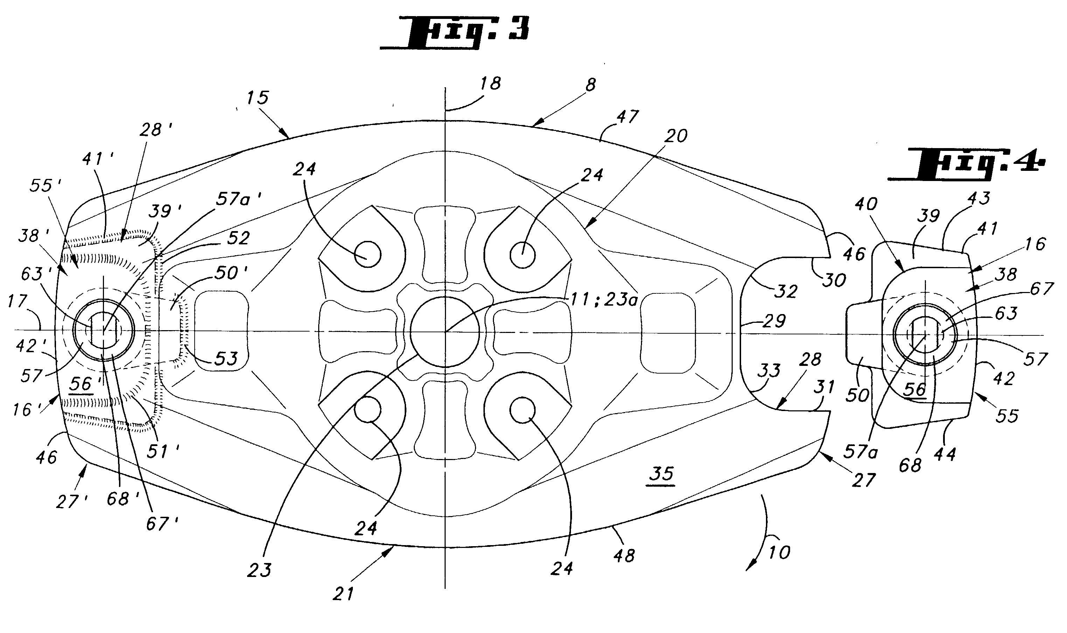

On voit que la structure principale (15) est composée, toujours selon l'exemple de réalisation représenté, d'une tôle ayant une certaine épaisseur et un certain nombre de renflements, de parties concaves et de parties planes permettant d'une part de rigidifier ladite structure principale (15) et d'autre part de lui donner une certaine forme destinée à transporter le produit coupé dans le sens inverse au sens d'avance (2). Pour ce faire, la structure principale ( 15) comporte une première partie (20) et une deuxième partie (21). Cette première partie (20) est destinée à être fixée à un arbre (22) correspondant d'axe longitudinal (22a) au moins sensiblement confondu avec l'axe de révolution (11 ). Ledit arbre (22) fait partie du mécanisme de coupe (S) et il entraîne en rotation l'organe de coupe (8) correspondant. A cet effet, la première partie (20) comporte, selon l'exemple de réalisation représenté. un trou central (23) et quatre trous périphériques (24). Le trou central (23), de forme circulaire, est situé au moins sensiblement au centre de la structure principale (15). Ce trou central (23) a un axe longitudinal (23a) au moins sensiblement confondu avec l'intersection des plans de symétrie (17, 18). Ce trou central (23) est en sus destiné à recevoir un arbre (22) correspondant décrit précédemment, et permet de centrer la structure principale (15) sur ledit arbre (22) de manière à garantir un fonctionnement correct. Les quatre trous périphériques (24) permettent quant à eux de fixer la structure principale (15), par conséquent l'organe de coupe (8), à l'arbre (11) correspondant au moyen de quatre vis (25). Pour ce faire, chaque vis (25) traverse la première partie (20) de ladite structure principale (15), et est vissée dans ledit arbre (11). A la lumière de la figure 3, on remarquera encore qu'il est prévu une partie plane entourant chaque trou périphérique (24) ce qui permet d'assurer un bon appui des vis (25) décrites ci-dessus.

Selon cette première forme de réalisation représentée, on notera encore que la première partie (20) de la structure principale (15) est en forme de tronc de cône et s'étend vers le haut. Cette première partie (20) est en sus au moins sensiblement concentrique au trou central (23) tel que visible sur la figure 3.

La deuxième partie (21) est quant à elle de forme allongée, plus précisément la deuxième partie (21) est de forme sensiblement ovale ou elliptique suivant le plan de symétrie longitudinal ( 17) et le plan de symétrie transversal ( 18).

Cette deuxième partie (21) comporte une première extrémité (27) située de part et d'autre du plan de symétrie longitudinal (17), au niveau de laquelle est prévue une première découpe (28) où est logé un premier support (16).

Comme décrit précédemment, la deuxième partie (21) est symétrique par rapport au plan de symétrie transversal (18). De ce fait, la deuxième partie (21) comporte également une deuxième extrémité (27') située de part et d'autre du plan de symétrie longitudinal (17), au niveau de laquelle est prévue une deuxième découpe (28') où est logé un deuxième support (16').

Etant donné que l'organe de coupe (8) est symétrique par rapport au plan de symétrie transversal (18), la deuxième découpe (28') et le deuxième support (16') sont au moins sensiblement identique à ladite première découpe (28) et audit premier support (16). C'est pourquoi. seuls la première découpe (28) et le premier support (16) seront décrits plus en détail.

Dans la suite de la description, les éléments affectés d'un repère suivit de l'exposant "prime" (') se rapportent à la deuxième découpe (28') et au deuxième support (16'). Ces éléments ne seront décrits plus en détail que si cela s'avère nécessaire.

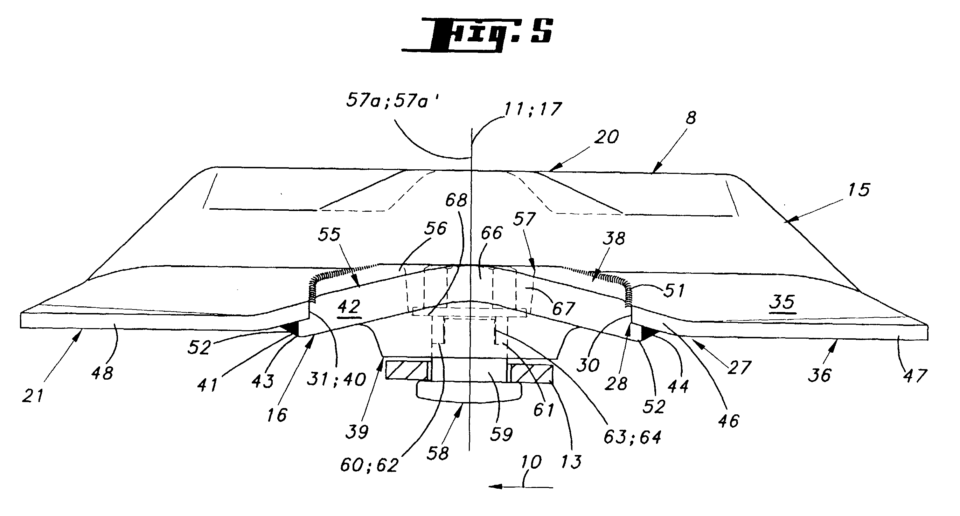

A la lumière des figures 3 et 4 on voit le support (16) avant qu'il ne soit logé dans la première découpe (28). La première découpe (28) comporte un premier côté (29) sensiblement orthogonalement au plan de symétrie longitudinal (17), un deuxième côté (30) et un troisième côté (31 ). Le deuxième côté (30) est contigu au premier côté (29) par l'intermédiaire d'une première forme arrondie (32), et s'étend sensiblement parallèlement au plan de symétrie longitudinal (17). Le troisième côté (31) est quant à lui situé en face du deuxième côté (30) par rapport au plan de symétrie longitudinal (17), et est contigu au premier côté (29) par l'intermédiaire d'une deuxième forme arrondie (33). Ce troisième côté (31) s'étend également sensiblement parallèlement au plan de symétrie longitudinal (17). Les trois côtés (29, 30, 31) de cette première découpe (28) forment un "U" dont la base est constituée par le premier côté (29) et dont l'ouverture est dirigée vers la première extrémité (27) de la deuxième partie (21) de ladite structure principale (15).

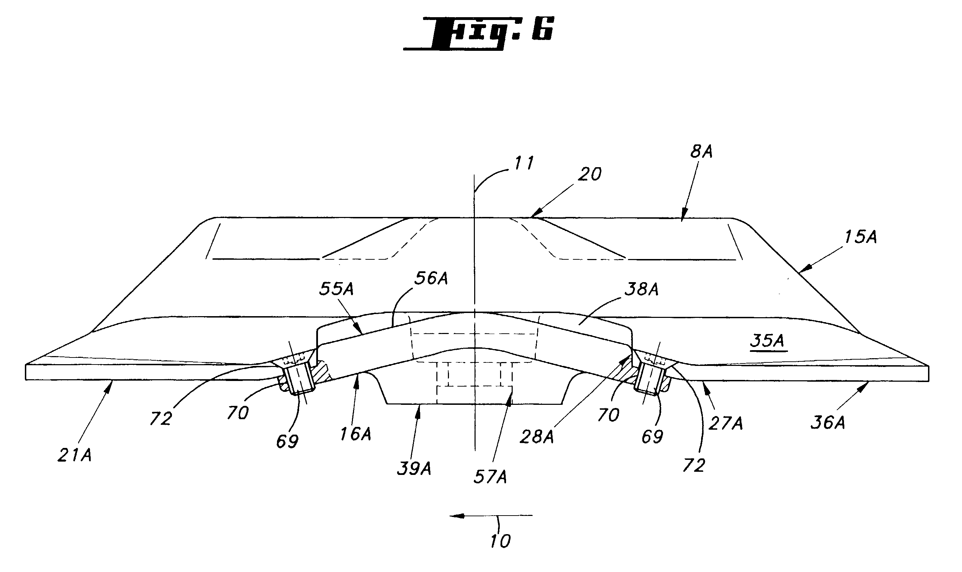

La deuxième partie (21) de la structure principale (15) de l'organe de coupe (8) comporte une surface supérieure (35) et une surface inférieure (36). A la lumière de la figure 5, on voit que la première extrémité (27) de la deuxième partie (21) de la structure principale (15) s'étend vers le haut aux alentours du deuxième côté (30) et du troisième côté (31 ) de la première découpe (28).

A la lumière des différentes figures, on voit en sus que le premier support (16) comporte une partie supérieure (38) et une partie inférieure (39). Selon une vue de dessus, la partie supérieure (38) est plus petite que la partie inférieure (39), et elles sont séparées par une arête (40).

A la lumière de la figure 4, on voit que la partie inférieure (39) du support (16) s'étend au-delà des limites de la partie supérieure (38) dudit support (16), ces limites étant définies par l'arête (40) décrite ci-dessus. Par conséquent, lorsque le premier support (16) est logé dans la première découpe (28). la partie inférieure (39) du premier support (16) est en appui contre la surface inférieure (36) de la deuxième partie (21) de la structure principale (15), et l'arête (40) est au moins sensiblement en appui contre la première découpe (28). Ainsi, la partie supérieure (38) du support (16) délimitée par l'arête (40) a également une forme en "U" qui épouse au moins sensiblement la première découpe (28).

On voit encore sur les figures 3 et 4 que lorsque le support (16) est logé dans la première découpe (28), la partie inférieure (39) dudit support (16) suit partiellement la forme de la deuxième partie (21) de la structure principale ( 15) de l'organe de coupe (8). En effet, l'extrémité (41) de la partie inférieure (39) comporte trois côtés (42, 43, 44) qui sont au moins sensiblement parallèles à trois côtés (46, 47, 48) correspondants de la deuxième partie (21) de la structure principale (15).

Une telle conception de l'organe de coupe (8) permet avantageusement de rigidifier ce dernier.

A la lumière de la figure 4, on voit en sus que la partie inférieure (39) du support (16) comporte une patte de renfort (50) au moins sensiblement symétrique par rapport au plan de symétrie longitudinal (17) et dirigée vers la première partie (20) de la structure principale (15) de l'organe de coupe (8) lorsque ledit support (16) est logé dans la découpe (28). Cette patte de renfort (50) vient en appui sur la surface inférieure (36) de la deuxième partie (21) de la structure principale (15).

Chaque support (16, 16') forme donc une pièce rapportée à la structure principale (15). Pour ce faire, selon ce premier exemple de réalisation représenté, chaque support (16, 16') est fixé à la deuxième partie (21) de la structure principale (15) de l'organe de coupe (8) par soudure. En effet. sur la figure 3, on voit que le support (16') est fixé à la deuxième partie (21) au moyen :
- d'un cordon de soudure supérieur (51') qui est à cheval sur l'arête (40') et la deuxième découpe (28') ;
- d'un cordon de soudure inférieur (52') s'étendant sur l'extrémité (41') de la partie inférieure (39') dudit support (16') et la surface inférieure (36) de ladite deuxième partie (21) ; et
- d'un autre cordon de soudure (53') s'étendant sur la patte de renfort (50') de ladite partie inférieure (39') et ladite surface inférieure (36).

Bien entendu le support (16) est destiné a être fixé à la deuxième partie (21) au moyen de cordon de soudure (51, 52. 53) correspondant.

On notera encore que l'organe de coupe (8) comporte, selon ce premier exemple de réalisation représenté, deux zones actives (55, 55') situées chacune aux alentours d'un élément de coupe (13. 13') correspondant et exposées chacune, durant le travail, au produit préalablement coupé par lesdits éléments de coupe (13, 13'). Chaque zone active (55, 55') contribue, lorsque l'organe de coupe (8) est animé en rotation autour de l'axe longitudinal (22a), au transport du produit coupé dans le sens inverse au sens d'avance (2).

Plus précisément, chaque partie supérieure (38, 38') du support (16, 16') correspondant forme au moins la zone active (55, 55') correspondante. Pour ce faire, on remarquera à la lumière des différentes figures que chaque support (16, 16') forme en grande partie l'extrémité (27, 27') correspondante de la deuxième partie (21 ) de la structure principale (15) de l'organe de coupe (8). En effet, on voit à la lumière des figures 3 et 5 que le côté (42, 42') de l'extrémité (41, 41') du support (16. 16') correspondant est plus grand que le côté (46, 46') de la structure principale ( 15).

Chaque partie supérieure (38, 38') du support (16, 16') correspondant comporte une surface supérieure convexe (56, 56') laquelle permet avantageusement de contribuer au transport du produit coupé.

A la lumière de la figure 5, on remarquera que la surface supérieure (35) de la deuxième partie (21) de la structure principale (15) s'étend à son extrémité (27, 27') correspondante sensiblement dans le prolongement de la surface supérieure (56, 56') du support (16, 16') correspondant. Une telle continuité des surfaces (35 ; 56, 56') de la structure principale (15) et des supports (16,16') permet avantageusement d'user moins les supports (16, 16') et par conséquent d'augmenter la durée de vie de l'organe de coupe (8).

Comme décrit précédemment chaque support (16, 16') forme au moins la zone active (55. 55') correspondante et par conséquent chaque support (16, 16') forme donc un élément d'usure. Par conséquent. chaque support (16, 16') comporte avantageusement une épaisseur supérieure à l'épaisseur de la deuxième partie (21) de la structure principale (15), ce qui permet d'augmenter encore davantage la durée de vie desdits supports (16, 16') et donc la durée de vie de l'organe de coupe (8).

Enfin on notera encore que chaque support (16, 16') comporte un trou (57, 57'), d'axe longitudinal (57a, 57'a) au moins sensiblement parallèle à l'axe longitudinal (23a) du trou central (23).

Chaque trou (57, 57') est destiné à recevoir une vis (58) supportant l'élément de coupe (13, 13') correspondant. A cet effet, on voit sur la figure 5 que la vis (58) s'étend dans le trou (57) vers le haut, et qu'elle comporte une partie cylindrique de guidage (59) sur laquelle est guidé l'élément de coupe (13). La vis (58) comporte également un épaulement (60) s'étendant dans une cavité inférieure (61) faisant partie dudit trou (57), et s'appuyant sur une surface d'appui inférieure (62) située au fond de ladite cavité inférieure (61).

Ce trou (57) comporte en sus une partie profilée (63) au niveau de laquelle s'étend une autre partie profilée (64) complémentaire appartenant à la vis (58). Ces deux parties profilées (63, 64) condamnent une éventuelle rotation de ladite vis (58) par rapport au support (16). A l'extrémité de la vis (58) est vissé un écrou (66) qui s'étend entièrement dans une cavité supérieure (67) prévue dans le support (16) et faisant partie du trou (57). Cet écrou (66) est en appui sur une surface d'appui supérieure (68) prévue au fond de la cavité supérieure (67). On notera encore que la cavité supérieure (67). la partie profilée (63) du trou (57) et la cavité inférieure (61) sont au moins sensiblement centrés sur l'axe longitudinal (57a) dudit trou (57).

La cavité supérieure (67) permet avantageusement de protéger l'écrou (66) du produit coupé, ce qui évite que ce dernier soit endommagé et ne puisse plus être défait pour changer l'élément de coupe (13) lorsque celui-ci est usé.

La figure 6 représente un organe de coupe (8A) selon une deuxième forme de réalisation. Cet organe comporte un certain nombre d'éléments qui ont été décrits précédemment. Ces éléments garderont par conséquent le même numéro de repère et ne seront pas redécrits. Cet organe comporte également un certain nombre d'éléments dont le repère est suivit de la lettre "A". Ces éléments-ci sont comparables à des éléments de l'organe de coupe (8) et ils ne seront décrits que si cela s'avère nécessaire.

Le deuxième exemple de réalisation de l'organe de coupe (8A) représenté par la figure 6 est dans l'ensemble très semblable à l'organe de coupe (8) décrit précédemment. Il convient de noter que la principale différence de cet organe de coupe (8A) par rapport à l'organe de coupe (8) décrit précédemment, réside dans le fait que chaque support (16A, 16'A) (seul le support (16A) étant représenté) est fixé à la deuxième partie (21A) de la structure principale (15A) de l'organe de coupe (8A) de manière amovible. A cet effet, on voit à la lumière de la figure 6 que le support (16A) est fixé à la deuxième partie (21A) au moyen de plusieurs vis (69) prenant d'une part appui sur la surface supérieure (35A) de ladite deuxième partie (21 A), et étant vissées d'autre part sur ledit support (16A). Pour ce faire, la partie inférieure (39A) du support (16A) est quelque peu plus grande que la partie inférieure (39) du support (16), et elle s'étend davantage sous la surface inférieure (36A) de la deuxième partie (21A) sur laquelle elle vient en appui. La partie inférieure (39A) comporte des trous taraudés (70) dans lesquels sont vissées les vis (69) correspondantes. La deuxième partie (21A) comporte quant à elle des trous (72) au travers desquels s'étendent les vis (69) correspondantes. On notera également que les vis (69) sont, selon ce deuxième exemple de réalisation représenté. des vis (69) à tête conique et que chaque trou (72) comporte une partie conique correspondante. Ceci permet avantageusement aux vis (69) de ne pas dépasser de la surface supérieure (35A) de la deuxième partie (21A) de la structure principale (15A) de l'organe de coupe (8A), lors de la mise en place.

Selon ce deuxième exemple de réalisation. on voit à la lumière de la figure 6 que seules deux vis (69) sont représentées.

Il est bien entendu parfaitement possible que le support (16A) peut être fixé à la deuxième partie (21A) au moyen d'un nombre de vis (69) plus important.

Le fait que les vis (69) soient au moins sensiblement à fleur avec la surface supérieure (35A) permet d'éviter une usure prématurée desdites vis (69), ce qui autorise le démontage aisé de celles-ci pour remplacer ledit support (16A) lorsqu'il est usé.

Finalement diverses modifications peuvent être apportées aux exemples qui viennent d'être décrits, notamment en ce qui concerne la constitution des divers éléments ou par substitution d'équivalents techniques, sans pour autant sortir du domaine de protection.

C'est ainsi qu'il est par exemple parfaitement possible de fixer de manière amovible chaque support (16, 16' ; 16A, 16'A) à la deuxième partie (21, 21A) de la structure principale (15, 15A) de l'organe de coupe (8, 8A) à l'aide d'autres moyens que ceux décrits précédemment.

## Revendications

1. Organe de coupe d'une machine de coupe destiné à être entraîné en rotation autour d'un axe de révolution (11) dirigé vers le haut et comportant :
- une structure principale (15 ; 15A),
- au moins deux supports (16, 16' ; 16A, 16'A) rapportés à ladite structure principale (15 ; 15A), chaque support (16, 16' ; 16A, 16'A) étant destiné à porter un élément de coupe (13, 13'), et
- au moins deux zones actives (55, 55') situées chacune aux alentours d'un élément de coupe (13, 13') correspondant et exposées chacune durant le travail au produit préalablement coupé par lesdits éléments de coupe (13, 13'), chaque zone active (55, 55') contribuant au transport dudit produit coupé,
**caractérisé en ce que** chaque support (16, 16' ; 16A, 16'A) comporte une partie supérieure (38, 38') formant au moins la zone active (55, 55') correspondante.

2. Organe de coupe d'une machine de coupe selon la revendication 1, **caractérisé en ce que** chaque partie supérieure (38, 38') d'un support (16, 16' ; 16A, 16'A) comporte une surface supérieure (56, 56') convexe.

3. Organe de coupe d'une machine de coupe selon la revendication 1 ou 2, ***caractérisé en ce* que** ladite structure principale (15) comporte une première partie (20) au moyen de laquelle ledit organe de coupe (8 ; 8A) est fixé à un arbre (22) d'axe longitudinal (22A) confondu avec l'axe de révolution (11), et une deuxième partie (21 ; 21 A) de forme allongée comportant d'une part une première extrémité (27 ; 27A) au niveau de laquelle est situé un premier support (16) et d'autre part une deuxième extrémité (27' ; 27'A) au niveau de laquelle est situé un deuxième support (16').

4. Organe de coupe d'une machine de coupe selon la revendication 3, **caractérisé en ce que** sa deuxième partie (21 ; 21A) est de forme sensiblement ovale ou elliptique.

5. Organe de coupe d'une machine de coupe selon la revendication 3 ou 4, ***caractérisé en ce* que** sa deuxième partie (21 ; 21A) comporte d'une part une première découpe (28) située à la première extrémité (27 ; 27A), et d'autre part une deuxième découpe (28') située à la deuxième extrémité (27', 27'A) chaque support (16, 16' ; 16A, 16'A) étant logé dans la découpe (28, 28') correspondante.

6. Organe de coupe d'une machine de coupe selon l'une quelconque des revendications 3 à 5, ***caractérisé en ce* que** chaque support (16, 16' ; 16A, 16'A) forme en grande partie l'extrémité (27, 27' ; 27A, 27'A) correspondante de la deuxième partie (21 ; 21A).

7. Organe de coupe d'une machine de coupe selon l'une quelconque des revendications 3 à 6, ***caractérisé en ce* que** la deuxième partie (21 ; 21A) comporte à chaque extrémité (27. 27' ; 27A, 27'A) une surface supérieure (35, 35' : 35A, 35'A) qui s'étend sensiblement dans le prolongement de la surface supérieure (56, 56') que comporte la partie supérieure (38, 38') du support (16. 16' ; 16A, 16'A) correspondant.

8. Organe de coupe d'une machine de coupe selon l'une quelconque des revendications 3 à 7, ***caractérisé en ce* que** chaque support (16, 16' ; 16A, 16'A) comporte une épaisseur supérieure à l'épaisseur de la deuxième partie (21 ; 21A).

9. Organe de coupe d'une machine de coupe selon l'une quelconque des revendications 3 à 8, ***caractérisé en ce* que** chaque support (16, 16' ; 16A, 16'A) comporte une partie inférieure (39, 39' ; 39A, 39'A) correspondante qui s'étend sous la deuxième partie (21, 21A).

10. Organe de coupe d'une machine de coupe selon la revendication 9. **caractérisé en ce que** la partie inférieure (39. 39' ; 39A, 39'A) de chaque support (16, 16' ; 16A, 16'A) comporte une patte de renfort (50, 50') qui s'étend vers la première partie (20).

11. Organe de coupe d'une machine de coupe selon la revendication 9 ou 10, ***caractérisé en ce* que** la partie inférieure (39, 39' ; 39A, 39'A) de chaque support (16, 16' ; 16A, 16'A) s'étend au-delà des limites de la partie supérieure (38, 38') dudit support (16, 16' ; 16A, 16'A).

12. Organe de coupe d'une machine de coupe selon l'une quelconque des revendications 9 à 11, ***caractérisé en ce* que** la partie inférieure (39, 39' ; 39A, 39'A) de chaque support (16, 16' ; 16A, 16'A) suit partiellement la forme de la deuxième partie (21, 21A).

13. Organe de coupe d'une machine de coupe selon l'une quelconque des revendications 3 à 12, **caractérisé en ce que** chaque support (16, 16') forme un support rapporté qui est fixé à la deuxième partie (21 ) par soudure.

14. Organe de coupe d'une machine de coupe selon l'une quelconque des revendications 3 à 12, **caractérisé en ce que** chaque support (16A, 16'A) forme un support rapporté qui est fixé à la deuxième partie (21 A) de manière amovible.

15. Organe de coupe d'une machine de coupe selon l'une quelconque des revendications 1 à 14, ***caractérisé en ce* que** chaque support (16, 16' ; 16A, 16'A) comporte un trou (57, 57') permettant d'y lier l'élément de coupe (13, 13') correspondant.

16. Machine de coupe destinée à être liée à un véhicule moteur et comportant un mécanisme de coupe (5) comportant au moins un organe de coupe (8 ; 8A) destiné à être entraîné en rotation autour d'un axe de révolution (11) dirigé vers le haut. ***caractérisée en ce* que** l'organe de coupe (8 ; 8A) est un organe de coupe selon l'une quelconque des revendications 1 à 15.

## Patentansprüche

1. Schneidglied einer Schneidmaschine, das dazu bestimmt ist, in Drehung um eine Drehachse (11), die nach oben gerichtet ist, angetrieben zu werden, das
- eine Hauptstruktur (15; 15A),
- mindestens zwei Träger (16, 16'; 16A, 16'A), die auf die Hauptstruktur (15; 15A) aufgesetzt sind, wobei jeder Träger (16, 16'; 16A, 16'A) dazu bestimmt ist, ein Schneidelement (13, 13') zu tragen, und
- mindestens zwei aktive Zonen (55, 55'), die sich jeweils in der Nähe eines entsprechenden Schneidelements (13, 13') befinden und jeweils während des Betriebs dem vorher von den Schneidelementen (13, 13') geschnittenen Produkt ausgesetzt sind, wobei jede aktive Zone (55, 55') zur Beförderung des Schnittguts beiträgt,
umfasst, **dadurch gekennzeichnet, dass** jeder Träger (16, 16'; 16A, 16'A) einen oberen Teil (38, 38') umfasst, der zumindest die entsprechende aktive Zone (55, 55') bildet.

2. Schneidglied einer Schneidmaschine nach Anspruch 1, ***dadurch gekennzeichnet,* dass** jeder obere Teil (38, 38') eines Trägers (16, 16'; 16A, 16'A) eine obere konvexe Fläche (56, 56') umfasst.

3. Schneidglied einer Schneidmaschine nach Anspruch 1 oder 2, ***dadurch gekennzeichnet,* dass** die Hauptstruktur (15) einen ersten Teil (20), mittels welchem das Schneidglied (8; 8A) an einer Welle (22) mit einer Längsachse (22A) befestigt ist, die mit der Drehachse (11) zusammenfällt, und einen zweiten Teil (21; 21 A) mit länglicher Form umfasst, der einerseits aus einem ersten Ende (27; 27A), auf dessen Höhe sich ein erster Träger (16) befindet, und andererseits aus einem zweiten Ende (27'; 27'A), auf dessen Höhe sich ein zweiter Träger (16') befindet, besteht.

4. Schneidglied einer Schneidmaschine nach Anspruch 3, ***dadurch gekennzeichnet,* dass** ihr zweiter Teil (21; 21A) im Wesentlichen ovale oder elliptische Form hat.

5. Schneidglied einer Schneidmaschine nach Anspruch 3 oder 4, ***dadurch gekennzeichnet,* dass** ihr zweiter Teil (21; 21A) einerseits einen ersten Ausschnitt (28), der sich am ersten Ende (27; 27A) befindet, und andererseits einen zweiten Ausschnitt (28') umfasst, der sich am zweiten Ende (27', 27'A) befindet, wobei jeder Träger (16, 16'; 16A, 16'A) in dem entsprechenden Ausschnitt (28, 28') untergebracht ist.

6. Schneidglied einer Schneidmaschine nach irgend einem der Ansprüche 3 bis 5, **dadurch gekennzeichnet, dass** jeder Träger (16, 16'; 16A, 16'A) zum Großteil das entsprechende Ende (27, 27'; 27A, 27'A) des zweiten Teils (21; 21 A) bildet.

7. Schneidglied einer Schneidmaschine nach irgend einem der Ansprüche 3 bis 6, **dadurch gekennzeichnet, dass** der zweite Teil (21; 21A) an jedem Ende (27, 27'; 27A, 27'A) eine obere Fläche (35, 35'; 35A, 35'A) umfasst, die sich im Wesentlichen in der Verlängerung der oberen Fläche (56, 56') erstreckt, die der obere Teil (38, 38') des entsprechenden Trägers (16, 16'; 16A, 16'A) umfasst.

8. Schneidglied einer Schneidmaschine nach irgend einem der Ansprüche 3 bis 7, **dadurch gekennzeichnet, dass** jeder Träger (16, 16'; 16A, 16'A) dicker als der zweite Teil (21; 21A) ist.

9. Schneidglied einer Schneidmaschine nach irgend einem der Ansprüche 3 bis 8, **dadurch gekennzeichnet, dass** jeder Träger (16, 16'; 16A, 16'A) einen entsprechenden unteren Teil (39, 39'; 39A, 39'A) umfasst, der sich unter dem zweiten Teil (21, 21A) erstreckt.

10. Schneidglied einer Schneidmaschine nach Anspruch 9, **dadurch gekennzeichnet, dass** der untere Teil (39, 39'; 39A, 39'A) jedes Trägers (16, 16'; 16A, 16'A) eine Verstärkungsklemme (50, 50') umfasst, die sich zum ersten Teil (20) hin erstreckt.

11. Schneidglied einer Schneidmaschine nach Anspruch 9 oder 10, ***dadurch gekennzeichnet,* dass** sich der untere Teil (39, 39'; 39A, 39'A) jedes Trägers (16, 16'; 16A, 16'A) über die Grenzen des oberen Teils (38, 38') des Trägers (16, 16'; 16A, 16'A) hinaus erstreckt.

12. Schneidglied einer Schneidmaschine nach irgend einem der Ansprüche 9 bis 11, ***dadurch gekennzeichnet,* dass** der untere Teil (39, 39'; 39A, 39'A) jedes Trägers (16, 16'; 16A, 16'A) teilweise der Form des zweiten Teils (21, 21A) folgt.

13. Schneidglied einer Schneidmaschine nach irgend einem der Ansprüche 3 bis 12, **dadurch gekennzeichnet, dass** jeder Träger (16, 16') einen aufgesetzten Träger bildet, der am zweiten Teil (21) durch Schweißen befestigt ist.

14. Schneidglied einer Schneidmaschine nach irgend einem der Ansprüche 3 bis 12, ***dadurch gekennzeichnet,* dass** jeder Träger (16A, 16'A) einen aufgesetzten Träger bildet, der am zweiten Teil (2 1 A) abnehmbar befestigt ist.

15. Schneidglied einer Schneidmaschine nach irgend einem der Ansprüche 1 bis 14, **dadurch gekennzeichnet, dass** jeder Träger (16, 16'; 16A, 16'A) ein Loch (57, 57') umfasst, das es ermöglicht, darin das entsprechende Schneidelement (13, 13') anzubinden.

16. Schneidmaschine, die dazu bestimmt ist, mit einem Motorfahrzeug verbunden zu werden, die einen Schneidmechanismus (5), der mit mindestens einem Schneidglied (8; 8A) versehen ist, das dazu bestimmt ist, in Drehung um eine nach oben gerichtete Drehachse (11) angetrieben zu werden, ***dadurch gekennzeichnet,* dass** das Schneidglied (8; 8A) ein Schneidglied nach irgend einem der Ansprüche 1 bis 15 ist.

## Claims

1. Cutting member of a cutting machine intended to be driven in rotation about an upwardly directed axis of revolution (11) and including:
- a main structure (15; 15A),
- at least two supports (16, 16'; 16A, 16'A) attached to the said main structure (15; 15A), each support (16, 16'; 16A, 16'A) being intended to carry a cutting element (13, 13'), and
- at least two active areas (55, 55') each located in the region of a corresponding cutting element (13, 13') and each exposed, during the work, to the product previously cut by the said cutting elements (13, 13'), each active area (55, 55') contributing to the transportation of the said cut product,
**characterized in that** each support (16, 16'; 16A, 16'A) includes an upper part (38, 38') forming at least the corresponding active area (55, 55').

2. Cutting member of a cutting machine according to Claim 1, ***characterized in that*** each upper part (38, 38') of a support (16, 16'; 16A, 16'A) includes a convex upper surface (56, 56').

3. Cutting member of a cutting machine according to Claim 1 or 2, **characterized in that** the said main structure (15) includes a first part (20) by means of which the said cutting member (8; 8A) is fastened to a shaft (22) of longitudinal axis (22A) coincident with the axis of revolution (11), and a second part (21; 21 A) of elongate shape which includes, on one hand, a first end (27; 27A) near which a first support (16) is located and, on the other hand, a second end (27'; 27'A) near which a second support (16') is located.

4. Cutting member of a cutting machine according to Claim 3, ***characterized in* that** its second part (21; 21A) is of approximately oval or elliptical shape.

5. Cutting member of a cutting machine according to Claim 3 or 4, ***characterized in* that** its second part (21; 21A) includes, on one hand, a first recess (28) located at the first end (27; 27A) and, on the other hand, a second recess (28') located at the second end (27', 27'A), each support (16, 16'; 16A, 16'A) being housed in the corresponding recess (28, 28').

6. Cutting member of a cutting machine according to any one of Claims 3 to 5, ***characterized in* that** each support (16, 16'; 16A, 16'A) forms to a large extent the corresponding end (27, 27'; 27A, 27'A) of the second part (21; 21A).

7. Cutting member of a cutting machine according to any one of Claims 3 to 6, ***characterized in* that** the second part (21; 21A) includes, at each end (27, 27'; 27A, 27'A), an upper surface (35, 35'; 35A, 35'A) which extends substantially along the extension of the upper surface (56, 56') that the upper part (38, 38') of the corresponding support (16, 16'; 16A, 16'A) has.

8. Cutting member of a cutting machine according to any one of Claims 3 to 7, ***characterized in* that** each support (16, 16'; 16A, 16'A) has a thickness greater than the thickness of the second part (21; 21A).

9. Cutting member of a cutting machine according to any one of Claims 3 to 8, ***characterized in* that** each support (16, 16'; 16A, 16'A) includes a corresponding lower part (39, 39'; 39A, 39'A) which extends below the second part (21, 21A).

10. Cutting member of a cutting machine according to Claim 9, ***characterized in* that** the lower part (39, 39'; 39A, 39'A) of each support (16, 16'; 16A, 16'A) includes a reinforcing tab (50, 50') which extends towards the first part (20).

11. Cutting member of a cutting machine according to Claim 9 or 10, ***characterized in* that** the lower part (39, 39'; 39A, 39'A) of each support (16, 16'; 16A, 16'A) extends beyond the limits of the upper part (38, 38') of the said support (16, 16'; 16A, 16'A).

12. Cutting member of a cutting machine according to any one of Claims 9 to 11, ***characterized in* that** the lower part (39, 39'; 39A, 39'A) of each support (16, 16'; 16A, 16'A) partially follows the shape of the second part (21, 21A).

13. Cutting member of a cutting machine according to any one of Claims 3 to 12, ***characterized in* that** each support (16, 16') forms an attached support which is fastened to the second part (21) by welding.

14. Cutting member of a cutting machine according to any one of Claims 3 to 12, ***characterized in* that** each support (16A, 16'A) forms an attached support which is fastened to the second part (21A) in a removable manner.

15. Cutting member of a cutting machine according to any one of Claims 1 to 14, ***characterized in* that** each support (16, 16'; 16A, 16'A) includes a hole (57, 57') allowing the corresponding cutting element (13, 13') to be linked thereto.

16. Cutting machine intended to be linked to a motor vehicle and comprising a cutting mechanism (5) which includes at least one cutting member (8; 8A) intended to be driven in rotation about an upwardly directed axis of revolution (11), ***characterized in* that** the cutting member (8; 8A) is a cutting member according to any one of Claims 1 to 15.
